# EUROPÄISCHE PATENTSCHRIFT

(11) **EP 4 220 103 B1**
(45) Veröffentlichungstag und Bekanntmachung des Hinweises auf die Patenterteilung: **25.06.2025**
(21) Anmeldenummer: 23153445.4
(22) Anmeldetag: 26.01.2023
(51) Int. Cl.: G01G 19/12

(54) **STÜTZENANORDNUNG UND DETEKTIONSVERFAHREN**
SUPPORT ASSEMBLY AND DETECTION METHOD
ENSEMBLE DE SUPPORT ET PROCÉDÉ DE DÉTECTION

(30) Priorität: 27.01.2022 DE 202022100475 U
(43) Veröffentlichungstag der Anmeldung: 02.08.2023
(73) Patentinhaber: Alois Kober GmbH, 89359 Kötz (DE)
(72) Erfinder: Harfmann, Patrick, 89129 Langenau (DE); Lukas, Maximilian, 89331 Burgau (DE); Mayer, Werner, 89359 Kötz (DE); Van Egmond, Ronald, 2033 ZA Haarlem (NL)
(74) Vertreter: ERNICKE Patent- und Rechtsanwälte PartmbB

(56) Entgegenhaltungen:
- EP-A1- 2 907 707
- DE-A1- 102017 130 139
- DE-A1- 2 916 125

## Beschreibung

Die Erfindung betrifft eine Stützenanordnung und ein Detektionsverfahren für einen Fahrzeuganhänger mit den Merkmalen in den selbstständigen Ansprüchen.

Aus der Praxis ist eine Stützenanordnung für einen straßentauglichen Fahrzeuganhänger bekannt, die mehrere Aufbaustützen umfasst, welche zur Befestigung an einem Aufbauboden eines Anhängeraufbaus vorgesehen und ausgebildet sind. Solche Aufbaustützen sind z.B. an den üblicherweise vier Ecken eines Anhängeraufbaus angeordnet. Die Aufbaustützen können manuell betätigt oder mit einem Antrieb versehen sein. Der Fahrzeuganhänger weist ein Chassis mit einer Achsanordnung, einer frontseitigen starren Zugdeichsel mit einer Deichselstütze und mit einer frontseitigen Anhängerkupplung auf. Auf dem Chassis ist ein Anhängeraufbau, z.B. ein Wohnwagenaufbau, angeordnet. Die Aufbaustützen dienen im ausgefahrenen Zustand zur Stabilisierung des abgestellten Fahrzeuganhängers auf dem Untergrund. Zur Belade- und Gewichtskontrolle wird der vorbekannte Fahrzeuganhänger auf eine Waage bewegt.

Die DE 29 16 125 A1 lehrt ein einzelnes Stützbein oder Stützrad mit einer Messeinrichtung, das am vorderen Deichselende eine Anhängers montiert ist, um die an der Anhängekupplung wirkende Anhängekraft F zu erfassen.

Aus der DE 10 2017 130 139 A1 ist eine hydraulische Hubstützenanordnung mit Wiegefunktion für ein Kraftfahrzeug bekannt, wobei die Hubstützen an Längsträgern des Fahrzeugchassis und an einer Einstiegstelle der Fahrerkabine montiert sind.

Die EP 2 907 707 A1 offenbart eine Nivelliereinrichtung für einen abgestellten Anhänger, die vier Aufbaustützen umfasst, welche an den vier Ecken des Aufbaubodens befestigt und abgestützt sind.

Es ist Aufgabe der vorliegenden Erfindung, eine verbesserte Möglichkeit zur Gewichtskontrolle eines solchen Fahrzeuganhängers aufzuzeigen.

Die Erfindung löst diese Aufgabe mit den Merkmalen in den selbstständigen Ansprüchen.

Die beanspruchte Detektionstechnik, d.h. die Stützanordnung mit der Detektionseinrichtung, der damit ausgerüstete Fahrzeuganhänger und das Detektionsverfahren, haben verschiedene Vorteile.

Die vorgenannte Stützenanordnung mit den mehreren front- und/oder heckseitigen Aufbaustützen kann mit einer Detektionseinrichtung für ein Gewichtsmerkmal des Fahrzeuganhängers ergänzt werden. Ein solches Gewichtsmerkmal ist bevorzugt das Gesamtgewicht (G) des Fahrzeuganhängers. Ein anderes alternatives oder zusätzliches detektierbares Gewichtsmerkmal kann eine am frontseitigen Deichselbereich, insbesondere an der Anhängerkupplung, wirkende aufrechte, insbesondere vertikale, Stützlast (S,S') sein. Ferner ist eine aufrechte, insbesondere vertikale, am Boden an den Fahrzeugrädern wirkende Achslast (AL) des Fahrzeuganhängers als alternatives oder zusätzliches Gewichtsmerkmal detektierbar. Die Stützlast (S,S') und die je nach Achsenzahl ein oder mehreren Achslast(en) (AL) können von der Stützenanordnung und deren Detektionseinrichtung separat für sich oder im Zusammenhang mit dem Gesamtgewicht (G) detektiert werden.

Die Detektionseinrichtung kann eine Steuereinrichtung sowie eine Bedieneinrichtung aufweisen. Sie kann ferner mehrere, bevorzugt zwei, von der Steuereinrichtung steuerbare, reversierend angetriebene sowie ein- und ausfahrbare Hubstützen umfassen. Die Hubstützen sind zusätzlich zu den mehreren Aufbaustützen vorhanden. Die Hubstützen sind zur Montage an der Achsanordnung sowie zum Heben und Senken der Achsanordnung vorgesehen und ausgebildet. Die zusätzlichen Hubstützen können auch zu anderen Zwecken eingesetzt werden, z.B. zum Nivellieren des Fahrzeuganhängers und zur Ausrichtung von dessen Chassis und Aufbauboden in einer gewünschten räumlichen Winkellage, z.B. in der Horizontalen. Den Hubstützen ist jeweils ein Detektionsmittel zugeordnet, welches die jeweilige aufrechte, insbesondere vertikale, Hubstützenlast (H) der mit Bodenkontakt ausgefahrenen Hubstützen aufnimmt.

Ferner kann eine Erfassungseinrichtung vorhanden sein, welche eine im Bereich der Zugdeichsel, insbesondere an der Deichselstütze, wirkende aufrechte, insbesondere vertikale, Stützlast (S,S') aufnimmt. Die Deichselstütze kann z.B. als höhenverstellbares Stützrad ausgebildet sein. Die an der Deichselstütze wirkende Stützlast (S') kann je nach Frontabstand der Deichselstütze geringfügig von der an der Anhängerkupplung wirkenden Stützlast (S) abweichen.

Die Stützlast (S) an der Anhängerkupplung ist von bevorzugter Bedeutung. Die Stützlast (S') an der Deichselstütze kann ersatzweise genommen werden.

Alternativ oder zusätzlich kann die Erfassungseinrichtung eine aufrechte, insbesondere vertikale, Aufbaustützenlast (A) von einer frontseitig am Anhängeraufbau anzuordnenden oder angeordneten und mit Bodenkontakt ausgefahrenen Aufbaustütze aufnehmen.

Die Aufnahme der besagten jeweiligen Lasten (A,H,S,S',AL) kann unmittelbar oder mittelbar erfolgen. Die Lasten können jeweils mit vertikaler Lastrichtung direkt aufgenommen werden. Sie können auch aus einem anders gearteten oder anders gerichteten Lastwert berechnet werden.

Aus den aufgenommenen Hubstützenlasten (H) kann die Steuereinrichtung in Verbindung mit der aufgenommenen Stützlast (S,S') und/oder der aufgenommenen Aufbaustützenlast(en) (A) das Gesamtgewicht (G) des Fahrzeuganhängers ermitteln. Alternativ oder zusätzlich können eine oder mehrere Achslast(en) (AL) ermittelt werden. Für die genannten Ermittlungen gibt es jeweils verschiedene Ausführungsmöglichkeiten. Die Steuereinrichtung kann das ermittelte Fahrzeuggewicht und/oder die Achslast(en) auch anzeigen. Dies kann z.B. über eine Anzeige der Bedieneinrichtung geschehen.

Das oder die Erfassungsmittel und die vorgenannten Detektionsmittel der Hubstützen können mit der Steuereinrichtung signaltechnisch verbunden sein. Sie können die detektierten bzw. erfassten Lastwerte direkt übermitteln.

In einer anderen Ausführung kann ein Bediener den an einem Erfassungsmittel angezeigten Stützlastwert z.B. ablesen und auf anderem Wege der Steuereinrichtung übermitteln, z.B. durch Eingabe an der Bedieneinrichtung.

Die Detektionsmittel und auch die Erfassungsmittel können in unterschiedlicher Weise ausgebildet sein und können unterschiedliche Werte detektieren. Sie können z.B. direkt eine Kraft detektieren. Sie können auch einen Druck, eine Dehnung oder einen anderen kraftspezifischen Parameter detektieren, aus dem dann ein Kraftwert der Hubstützenlast (H), Stützlast (S,S') oder Aufbaustützenlast (A) unter Einbeziehung weiterer bekannter Parameter berechnet wird, z.B. anhand der bekannten Größe der vom gemessenen Druck beaufschlagten Fläche, insbesondere Kolbenfläche.

Für die Detektion des Gesamtgewichts (G) gibt es verschiedene Möglichkeiten.

In der einen Variante wird der abgekuppelte Fahrzeuganhänger für die Detektion des Gesamtgewichts (G) auf den z.B. zwei Hubstützen an der Achsanordnung sowie auf der frontseitigen Deichselstütze abgestützt. Dies ist eine 3-Punkt-Abstützung. Die Zahl der Abstützpunkte kann variieren, z.B. mit der Zahl der Hubstützen. Die Achsanordnung mit den Fahrzeugrädern kann freigehoben sein.

Die Erfassungseinrichtung kann ein an der Deichselstütze anzuordnendes oder angeordnetes Erfassungsmittel für die hier wirkende Stützlast (S') aufweisen. Ein Erfassungsmittel kann alternaiv oder zusätzlich an der Anhängerkupplung angeordnet sein und kann dort bei angekuppeltem Fahrzeuganhänger die auf die Zugkupplung des Zugfahrzeugs ausgeübte Stützlast (S) erfassen.

Aus den Hubstützenlasten (H) und der Stützlast (S,S') kann die Steuereinrichtung bei dieser z.B. 3-Punkt-Abstützung des Fahrzeuganhängers dessen Gesamtgewicht (G) ermitteln, z.B. durch Addition der besagten Lasten.

In einer anderen Variante der Anhängerabstützung auf den Hubstützen und der Deichselstütze oder am Zugfahrzeug kann das Gesamtgewicht des Fahrzeuganhängers auch dann detektiert werden, wenn an der Deichselstütze und der Anhängerkupplung kein Erfassungsmittel angeordnet ist.

In diesem Fall können ein oder mehrere der frontseitig am Anhängeraufbau anzuordnenden oder angeordneten Aufbaustützen mit einem Erfassungsmittel ausgestattet sein, welches die Erfassung einer jeweiligen Aufbaustützenlast (A) ermöglicht. Hierfür können die ein oder mehreren frontseitigen Aufbaustützen manuell oder mit einem gesteuerten Antrieb mit Bodenkontakt ausgefahren werden. Sie können dabei den frontseitig vor der Achsanordnung befindlichen Anhängerbereich anheben unter Entlastung der Deichselstütze. Das Gesamtgewicht (G) kann dann aus den jeweils aufgenommenen Hubstützenlasten (H) und Aufbaustützenlasten (A) ermittelt werden, **z.B.** durch Addition der besagten Lasten.

Die Anordnung eigener Hubstützen an der Achsanordnung des Fahrzeuganhängers hat den Vorteil, dass die Achsanordnung zusammen mit dem Anhängeraufbau und dem Chassis direkt und sicher angehoben werden kann. Die Fahrzeugräder können vom Boden gelöst werden. Hierdurch können Verwindungen des Chassis bzw. Anhängeraufbaus und damit einhergehende Messfehler vermieden oder zumindest minimiert werden. Die Achsanordnung, insbesondere ein Achskörper, ist ein Fahrzeugteil mit hoher mechanischer Stabilität. Zudem können die detektierten Hubstützenlasten (H) auch repräsentativ für die Achslast(en) (AL) des Fahrzeuganhängers sein. Die isolierte Erfassung der Achslast(en) (AL) kann ein eigener Aspekt der Erfindung sein.

Die vorgenannte zweite Variante mit der Erfassung der Aufbaustützenlast(en) (A) kann auch zur Detektion eines weiteren Gewichtsmerkmals des Fahrzeuganhängers genutzt werden. Dieses Gewichtsmerkmal kann die an der frontseitigen Anhängerkupplung wirkende Stützlast (S) betreffen. Diese Stützlast unterliegt Beschränkungen bei den Zulassungsvorschriften des Zugfahrzeugs. Die Stützlast (S) oder die vom Fahrzeuganhänger auf das Zugfahrzeug ausgeübte Stützkraft im angekuppelten Zustand darf z.B. im Falle eines Gespanns mit einem PKW nicht mehr als 100 kg betragen.

Die Detektionseinrichtung ermöglicht eine Detektion dieser kupplungseitigen Stützlast (S) auch ohne lastanzeigende Deichselstütze. In diesem Fall kann z.B. aus der oder den aufgenommenen Aufbaustützenlast(en) (A) unter Berücksichtigung der bekannten Abstände zwischen den Hubstützen und der oder den frontseitigen Aufbaustützen einerseits sowie der frontseitigen Anhängerkupplung andererseits die kupplungseitige Stützlast (S) ermittelt, insbesondere berechnet werden. Es ist andererseits auch möglich, eine an anderer Deichselstelle, z.B. an der Deichselstütze, wirkende Stützlast (S') zu ermitteln, insbesondere zu berechnen.

Die Stützenanordnung, insbesondere die Detektionseinrichtung, kann einen bevorzugt mit der Steuereinrichtung verbundenen Neigungssensor umfassen. Dieser kann eine Neigung des Fahrzeuganhängers um seine Längsachse und ggf. auch eine Neigung um seine Querachse aufnehmen. Damit kann z.B. die Achsanordnung horizontal ausgerichtet werden, bevor die Hubstützenlasten (H) detektiert werden. Andererseits können bei bestehender Schräglage die aufgenommenen Hubstützenlasten (H) über einen erfassten Neigungswinkel umgerechnet werden. Der Neigungssensor kann auch als Nivelliersensor für eine Nivelliereinrichtung benutzt werden oder kann vorhandener Bestandteil einer Nivelliereinrichtung sein. Der Neigungssensor kann zweiachsig messen oder kann von zwei ggf. distanzierten einachsigen Einzelsensoren gebildet sein.

Die beanspruchte Stützenanordnung kann eine eigenständige Einheit darstellen, die an einem Fahrzeuganhänger nachgerüstet oder umgerüstet werden kann oder auch im Wege der Erstausrüstung herstellerseitig am Fahrzeuganhänger montiert werden kann.

Die Stützenanordnung kann bereits vorhandene Komponenten eines Fahrzeuganhängers, z.B. Aufbaustützen, benutzen oder modifizieren. Insbesondere ist es von Vorteil, die frontseitige(n) Aufbaustütze(n) zu modifizieren und mit einem Erfassungsmittel für die Aufbaustützenlast auszurüsten. Diese frontseitigen Aufbaustützen können auch mit einem gesteuerten und mit der Steuereinrichtung verbundenen Stützenantrieb ausgerüstet oder nachgerüstet werden. Die frontseitigen Aufbaustütze(n) sind für eine Anordnung zwischen der Achsanordnung und dem vorderen Deichselende bzw. der Anhängerkupplung vorgesehen und ausgebildet.

Die Stützenanordnung umfasst zumindest zwei, z.B. frontseitige, Aufbaustützen. Sie kann auch ein oder mehrere heckseitige Aufbaustützen umfassen. Diese können manuell betätigbar oder ferngesteuert angetrieben sein. In einer weiteren Variante ist es möglich, nur heckseitige Aufbaustützen in vorhandener oder modifizierter Form zu benutzen und frontseitige Aufbaustützen wegzulassen.

Die Bedieneinrichtung und die Steuereinrichtung können Kommunikationsmittel zur leitungsgebundenen oder bevorzugt drahtlosen Kommunikation aufweisen. Die Bedieneinrichtung und die Steuereinrichtung können fest am Fahrzeuganhänger angeordnet werden.

Die Bedieneinrichtung kann ein bevorzugt mobiles Bediengerät mit einer Anzeige, einem Eingabemittel und einem Kommunikationsmittel umfassen. Dies kann ein spezifisches Bediengerät sein, welches speziell für die Stützenanordnung vorgesehen und ausgebildet ist. Es kann auch für weitere Funktionen der Stützenanordnung, z.B. i.V.m. einer Nivelliereinrichtung, genutzt werden.

Die Bedieneinrichtung kann andererseits eine App für ein ggf. kundenseitig bereits vorhandenes mobiles und unspezifisches Consumer-Bediengerät umfassen. Das Consumer-Bediengerät kann z.B. als Smartphone, Tablet, Notebook oder dgl. ausgebildet sein und kann eine Anzeige, Eingabemittel und Kommunikationsmittel, z.B. eine Bluetooth- oder WLAN-Schnittstelle, haben.

Für die konstruktive und funktionale Ausbildung der Hubstützen und der Aufbaustützen gibt es verschiedene Möglichkeiten, zu denen bevorzugte und vorteilhafte Ausbildungen in den Unteransprüchen angegeben sind.

Die Hubstützen und die Aufbaustützen können einen Stützenantrieb und ein hiervon angetriebenes Stützelement umfassen. Das Stützelement kann ein Bestandteil des Stützenantriebs, z.B. eine Kolbenstange oder Treibstange, oder ein separates Teil, z.B. ein Schwenkarm, sein. Der Stützenantrieb kann als z.B. hydraulischer Antrieb, insbesondere hydraulischer Zylinder, oder als elektromotorischer Antrieb ausgebildet sein. Ein hydraulischer Zylinder kann beidseitig wirken und aktiv ausfahren sowie einfahren. Alternativ ist ein einseitig wirkender Zylinder zum hydraulischen Ausfahren mit einer Rückholfeder oder dgl. zum Einfahren möglich. Ein hydraulischer Zylinder kann einstufig oder mehrstufig ausgebildet sein.

Senkrecht aus- und einfahrbare Hubstützen können platzsparend an der Achsanordnung angeordnet werden und haben Vorteile hinsichtlich Kraftwirkung und Detektionsgenauigkeit. Eine Ausbildung der Aufbaustützen mit Schwenkarm und bevorzugt gesteuert angetriebener Stützmechanik ist günstig für große Hublängen, insbesondere zur Kompensation von Bodenunebenheiten, und für eine sichere Abstützung des abgekuppelten Fahrzeuganhängers. Sie können außerdem belastungsgünstig am Aufbauboden montiert werden.

Ansonsten können die Hubstützen und die Aufbaustützen auch in anderer Weise ausgebildet sein. Die Aufbaustützen können z.B. ähnlich wie die Hubstützen gestaltet sein und ein aufrechtes, ein- und ausfahrbares Stützelement aufweisen.

Die Detektionseinrichtung und die ein oder mehreren detektierten Gewichtsmerkmale können für weitere Zwecke benutzt werden. Dies kann z.B. die Nutzung des detektierten Gesamtgewichts (G) für die Ansteuerung einer Bremseinrichtung des Fahrzeuganhängers betreffen. Diese kann die Bremskräfte in Abhängigkeit vom Gesamtgewicht (G) steuern, um z.B. ein Überbremsen bei geringem Gewicht oder Unterbremsen bei hohem Gewicht zu vermeiden. Die Bremskraftanpassung kann die Betriebsbremse, insbesondere Auflaufbremse, des Fahrzeuganhängers betreffen. Sie kann auch eine eventuell vorhandene Schlingerbremse oder Stabilisierungseinrichtung betreffen, welche bei der Detektion von Schlinger- oder Schleuderbewegungen des Fahrzeuganhängers die Radbremsen betätigt und die betreffenden Bewegungen dämpft sowie die Fahrstabilität des Fahrzeuganhängers wiederherstellt.

In den Unteransprüchen sind weitere vorteilhafte Ausgestaltungen der Erfindung angegeben.

Die beanspruchte Detektionstechnik, d.h. die Stützanordnung mit der Detektionseinrichtung, der damit ausgerüstete Fahrzeuganhänger und das Detektionsverfahren, kann/können folgende weitere Ausgestaltungen aufweisen, die einzeln oder in beliebiger Kombination eingesetzt werden können.

Die Detektionseinrichtung der Stützenanordnung kann ein oder mehrere Detektionsmittel umfassen, die mit der Steuereinrichtung der Stützenanordnung signaltechnisch verbunden sind.

Die Erfassungseinrichtung der Stützenanordnung kann ein oder mehrere Erfassungsmittel umfassen, die mit der Steuereinrichtung der Stützenanordnung signaltechnisch verbunden sind.

Ein Detektionsmittel kann als fluidischer, insbesondere hydraulischer, Drucksensor oder als Kraftsensor ausgebildet sein.

Ein Erfassungsmittel kann als fluidischer, insbesondere hydraulischer, Drucksensor oder als Kraftsensor ausgebildet sein.

Eine Bedieneinrichtung und eine Steuereinrichtung der Detektionseinrichtung können Kommunikationsmittel zur leitungsgebundenen oder drahtlosen Kommunikation aufweisen.

Die Stützenanordnung kann einen Montagebeschlag umfassen, der zur Montage einer Hubstütze an der Achsanordnung, insbesondere an einem Achskörper der Achsanordnung, ausgebildet sein kann.

Zumindest eine Hubstütze der Stützenanordnung kann ein bevorzugt vertikal ein- und ausfahrbares Stützelement und einen reversierbaren Stützenantrieb umfassen. Alternativ oder zusätzlich kann zumindest eine Aufbaustütze ein bevorzugt vertikal ein- und ausfahrbares Stützelement und einen reversierbaren Stützenantrieb umfassen.

Der Stützenantrieb der Hubstütze und/oder der Aufbaustütze kann jeweils als bevorzugt beidseitig wirkender Zylinder ausgebildet sein, wobei das Stützelement jeweils als Kolbenstange mit einem endseitigen Stützteller ausgebildet sein kann.

Der Stützenantrieb der Hubstütze und/oder der Aufbaustütze kann jeweils als bevorzugt elektrischer Antriebsmotor ausgebildet sein, wobei das Stützelement als Treibstange mit einem Stützteller ausgebildet sein kann.

Das Stützelement einer Hubstütze kann einen schwenkbaren Stützarm und einen hydromechanisch, insbesondere hydraulisch, oder motorisch angetriebenen Schwenkmechanismus aufweisen.

Eine hydraulische Hubstütze und eine oder mehrere hydraulische Aufbaustützen der Stützenanordnung können mit einer hydraulischen Versorgungseinrichtung in einem Hydraulikkreis verbunden sein.

Im Hydraulikkreis kann ein Drucksensor angeordnet sein, wobei die Steuereinrichtung aus dem sensierten hydraulischen Druck die Hubstützenlast (H) und/oder die Aufbaustützenlast (A) ermitteln kann.

Ein Kraftsensor eines Detektionsmittels und/oder eines Erfassungsmittels kann an einem Stützelement und/oder an einem Stützenantrieb einer Hubstütze und/oder einer Aufbaustütze angeordnet sein.

Ein mit der Stützanordnung ausgerüsteter straßentauglicher Fahrzeuganhänger kann die Achsanordnung mit einer oder mehreren Anhängerachsen, insbesondere gefederten Radlenkerachsen, umfassen.

Die starre Zugdeichsel eines mit der Stützanordnung ausgerüsteten straßentauglichen Fahrzeuganhängers kann als V-Deichsel oder als Rohrdeichsel ausgebildet sein.

Die Erfindung ist in den Zeichnungen beispielhaft und schematisch dargestellt. Im Einzelnen zeigen:
- Figur 1:: Ein Gespann mit Zugfahrzeug und Fahrzeuganhänger sowie einer Stützenanordnung und Detektionseinrichtung am Fahrzeuganhänger;
- Figur 2:: Eine Draufsicht auf den Fahrzeuganhänger von Figur 1;
- Figur 3 und 4:: Eine erste Variante einer Aufbaustütze der Stützenanordnung;
- Figur 5 und 6:: Eine zweite Variante einer Aufbaustütze;
- Figur 7:: Den abgekuppelten und auf einer Deichselstütze sowie auf ausgefahrenen Hubstützen abgestützten Fahrzeuganhänger;
- Figur 8:: Den Fahrzeuganhänger von Figur 7 mit angehobenem Frontende und ausgefahrenen frontseitigen Aufbaustützen;
- Figur 9:: Eine perspektivische Unteransicht einer Variante eines Fahrzeuganhängers und
- Figur 10:: Eine Seitenansicht des Fahrzeuganhängers von Figur 9.

Die Erfindung betrifft eine Stützenanordnung (1) für einen straßentauglichen Fahrzeuganhänger (2), den damit ausgerüsteten Fahrzeuganhänger (2) und ein Detektionsverfahren für die Detektion von ein oder mehreren Gewichtsmerkmalen des Fahrzeuganhängers (2).

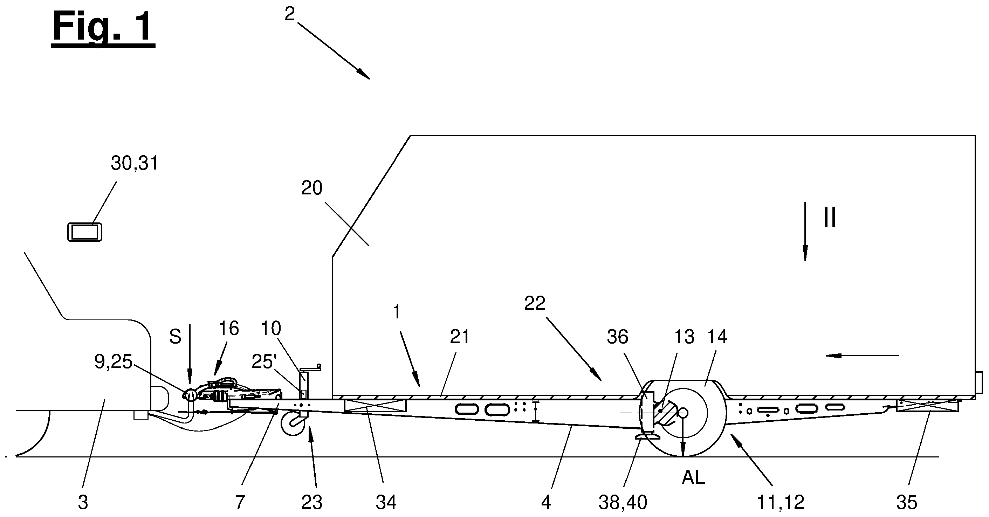

Der straßentaugliche Fahrzeuganhänger (2) ist ein Straßenfahrzeug, das im Gespannbetrieb von einem Zugfahrzeug (3), z.B. einem PKW, gezogen wird. Figur 1 zeigt das Gespann. Die Vorwärtsfahrtrichtung ist durch Pfeil markiert.

Der Fahrzeuganhänger (2) weist ein Chassis (4), eine Achsanordnung (11), eine frontseitige starre Zugdeichsel (7) mit einer Deichselstütze (10) und einer frontseitigen Anhängerkupplung (9) sowie einen Anhängeraufbau (20) auf. In Figur 1 und 2 sowie Figur 9 und 10 sind verschiedene Varianten eines Fahrzeuganhängers (2) und seines Chassis (4) dargestellt.

Das Chassis (4) weist in den verschiedenen Varianten jeweils parallele Längsträger (5) und evtl. ein oder mehrere Querträger (6) auf. Die starre Zugdeichsel (7) ist z.B. als V-Deichsel mit zwei Deichselholmen (8) ausgebildet, die am vorderen bzw. frontseitigen Deichselende miteinander verbunden sind und die an den rückwärtigen Enden mit den Längsträgern (5) verbunden sind. Die starre Zugdeichsel (7) kann alternativ als Rohrdeichsel ausgebildet sein. Das Chassis (4) hat eine in Vorwärtsfahrtrichtung weisende Längachse ((46) und eine Querachse (45).

Die Längs- und Querträger (5,6) und die Deichselholme (8) sind bevorzugt als abgekantete Profile aus einem Stahlblech mit einem z.B. L-, Z- oder C-förmigen Querschnitt ausgebildet. Sie haben einen aufrechten einzelnen Mittelsteg und Quergurte an der Ober- und/oder Unterseite.

Die Deichselstütze (10) ist an der Zugdeichsel (7) bevorzugt lösbar montiert. Die Deichselstütze (10) ist z.B. als höhenverstellbares Stützrad ausgebildet, das z.B. manuell oder durch einen gesteuerten Antrieb verstellt werden kann. Die Deichselstütze (10) ist bevorzugt nahe am Frontende der Zugdeichsel (7) und nahe an der Anhängerkupplung (9) angeordnet. An der am Boden abgestützten Zugdeichsel (7) wirkt bei abgekuppeltem Fahrzeuganhänger (2) eine aufrechte, insbesondere vertikale, Stützkraft (S').

Die frontseitige Anhängerkupplung (9) ist z.B. als Kugelkopfkupplung ausgebildet. Sie kann ansonsten eine andere Ausgestaltung haben. Die Anhängerkupplung (9) weist z.B. eine Kugelkalotte auf, die im angekuppelten Zustand auf der Kugel der Zugkupplung des Zugfahrzeugs (3) mit einer aufrechten, insbesondere vertikalen, Stützkraft (S) aufliegt.

Die Achsanordnung (11) umfasst eine oder mehrere Anhängerachsen (12). In den gezeigten Ausführungsbeispielen sind Einzelachsen dargestellt. Alternativ sind z.B. Tandem-Achsen oder Trippelachsen möglich.

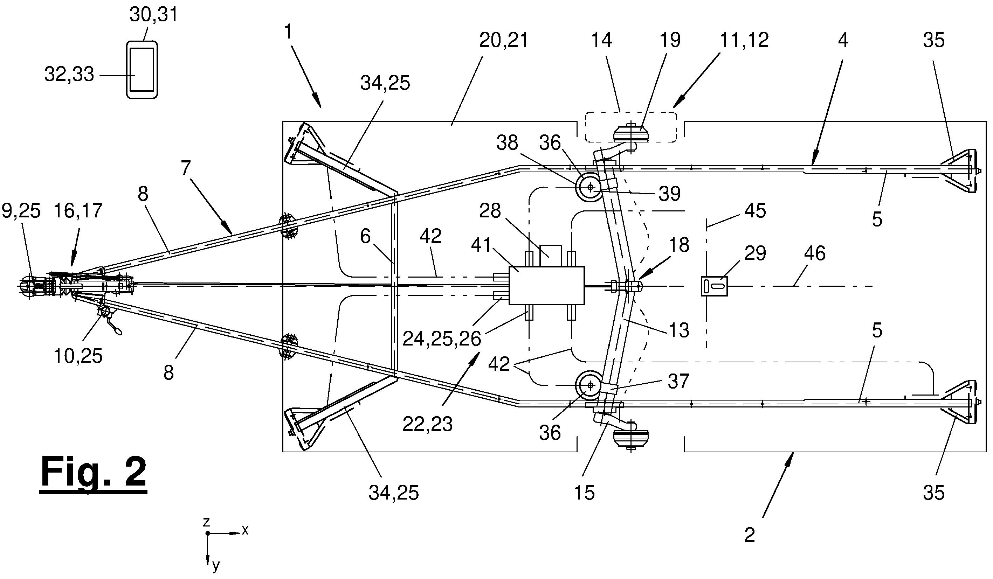

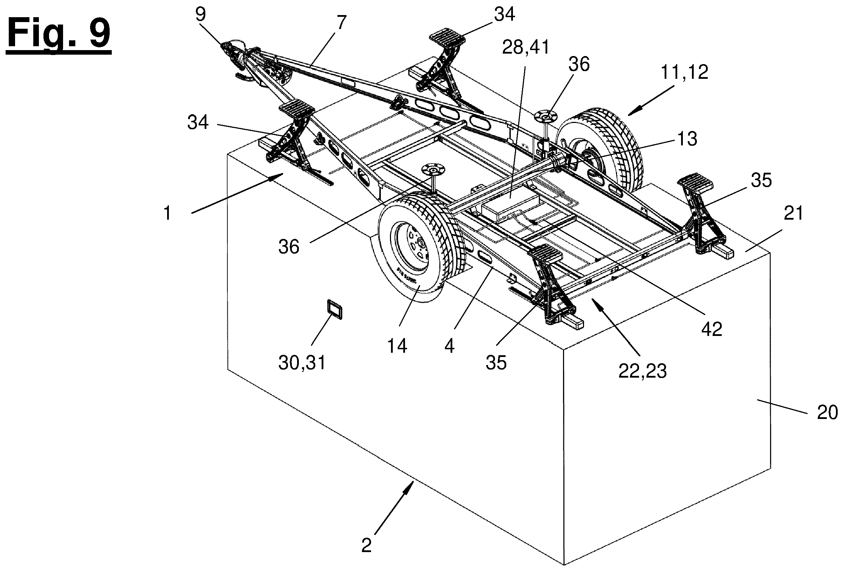

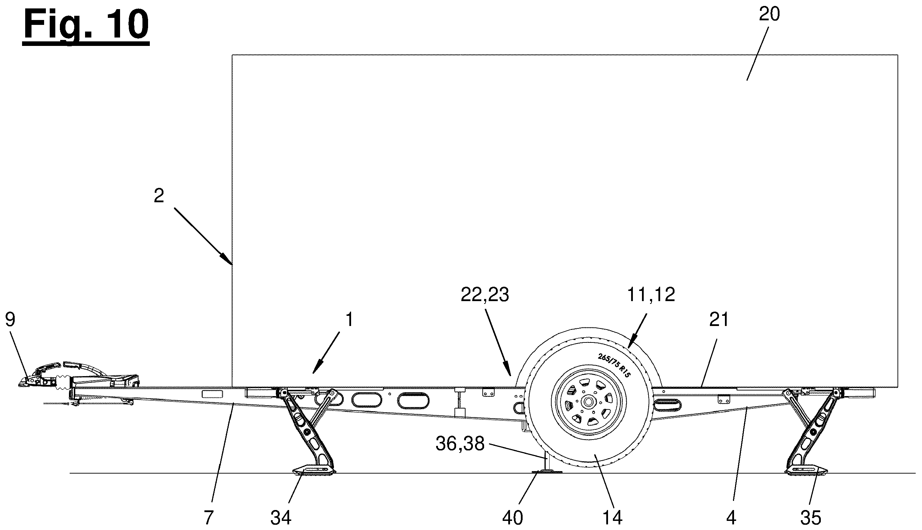

Die ein oder mehreren Anhängerachsen (12) sind bevorzugt jeweils als gefederte Radlenkerachsen, z.B. als Gummifederachsen oder Torsionsfederachsen, ausgebildet. Dies können z.B. Schräglenkerachsen gemäß Figur 1 und 2 oder Längslenkerachsen gemäß Figur 9 und 10 sein. Die ein oder mehreren Anhängerachsen (12) umfassen jeweils zumindest einen Achskörper (13) mit zumindest einem endseitig schwenkbar gelagerten Radschwinghebel (15) und einem hieran angeordneten frei drehbaren Fahrzeugrad (14).

In den gezeigten Ausführungsbeispielen reicht der Achskörper (13) über die gesamte Fahrzeugbreite und ist an beiden Enden mit einem Radschwinghebel (15) versehen. In einer anderen Ausführungsform können Halbachsen oder Stummelachsen mit verkürzten Achskörpern (13) und einseitigen Radschwinghebeln (15) zum Einsatz kommen. Die Anhängerachsen (12), insbesondere Achskörper (13), können mit dem Chassis (4), insbesondere dessen Längsträgern (5), in beliebig geeigneter Weise verbunden sein, z.B. über Achsböcke oder Achsträgerschilde. Ferner sind andere Achskonstruktionen möglich, z.B. mit gefederten Starrachsen oder mit einer Anordnung von einem Radträger an jeweils einer Federbalkenanordnung, wobei Radlenker entfallen können.

Der Fahrzeuganhänger (2) kann eine Bremseinrichtung (16) aufweisen. Diese umfasst eine Betriebsbremse (17) und hiervon über z.B. mechanische, hydraulische oder elektrische Bremszüge betätigte, Radbremsen (19), z.B. mechanische Reibbremsen, an den Fahrzeugrädern (14). Die Betriebsbremse (17) ist z.B. als Auflaufbremse ausgebildet, wobei die Auflaufeinrichtung an der Anhängerkupplung (9) angeordnet mit dieser verbunden ist. Die Auflaufbremse kann z.B. über einen mit der Steuereinrichtung (28) verbundenen Aktor beeinflusst werden.

Die Bremseinrichtung (16) kann ferner eine Feststellbremse und im weiteren auch eine in Figur 2 angedeutete Schlingerbremse (18) umfassen. Die Schlingerbremse oder sogenannte Stabilisierungseinrichtung umfasst eine Schlingersensorik und einen Aktor nebst Steuerung der bei Auftreten von sensierten Schlinger- oder Schleuderbewegungen des Fahrzeuganhängers (2) die Radbremsen (19) unabhängig von der Betriebsbremse (17) betätigt und dadurch die Schlinger- oder Schleuderbewegungen geregelt dämpft.

Der Aufbau (20) umfasst einen Aufbauboden (21) und ist mit diesem auf dem Chassis (4) angeordnet. Der Aufbauboden (21) liegt auf den Längsträgern (5) und ggfs. der Zugdeichsel (7) auf und ist hier in geeigneter Weise befestigt. Der Fahrzeugaufbau (20) kann in beliebiger Weise ausgebildet sein. In den gezeigten und bevorzugten Ausführungsbeispielen ist dies ein Kastenaufbau, ein Wohnwagenaufbau oder dergleichen.

Am Fahrzeuganhänger (2) ist eine Stützenanordnung (1) angeordnet. Diese kann im Wege der Erstausrüstung oder der Nachrüstung bzw. Umrüstung montiert werden.

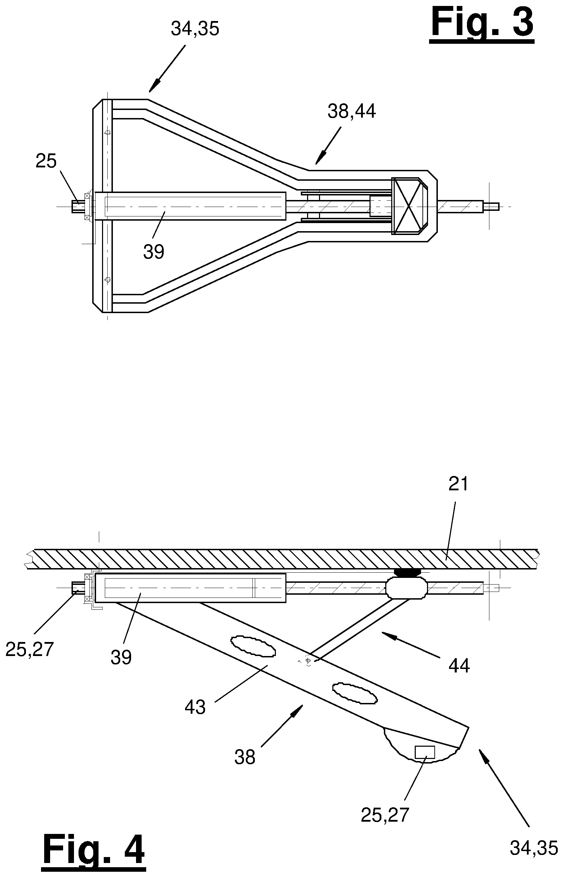

Die Stützenanordnung (1) umfasst mehrere Aufbaustützen (34,35) die am Chassis (4) und/oder am Aufbauboden (21) an dessen Unterseite befestigbar oder befestigt sind. In den gezeigten Ausführungsbeispielen von Figur 1 und 2 sowie Figur 9 und 10 sind jeweils vier Aufbaustützen (34,35) an den Ecken des rechteckigen Fahrzeugaufbaus (20) angeordnet. Die heckseitigen Aufbaustützen (35) sind in Richtung der Längsachse (46) ausgerichtet und nahe oder am jeweiligen Längsträger (5) angeordnet. Die frontseitigen Aufbaustützen (34) können längs oder schräg zur Längsachse (46) ausgerichtet und getrennt von der Zugdeichsel (7) an der Unterseite des Aufbaubodens (21) befestigt sein. In den nachfolgend erläuterten Figuren 3 bis 6 sind konstruktive Varianten der Aufbaustützen (34,35) dargestellt.

Abweichend von den gezeigten Ausführungsbeispielen können die Zahl und Anordnung der Aufbaustützen (34,35) variieren. In einer Variante können z.B. nur frontseitige Aufbaustützen (34) vorhanden sein. Diese befinden sich am vorderen Rand des Anhängeraufbaus (20). Sie sind in Vorwärtsfahrtrichtung vor der Achsanordnung (11) angeordnet und befinden sich zwischen der Achsanordnung (11) und dem frontseitigen Deichselende bzw. der dortigen Anhängerkupplung (9). In einer anderen Variante sind nur heckseitige Aufbaustützen (35) vorhanden, wobei die frontseitigen Aufbaustützen (34) entfallen. Daneben sind weitere Variationsmöglichkeiten gegeben.

Die Stützenanordnung (1) weist eine Detektionseinrichtung (22) für ein Gewichtsmerkmal des Fahrzeuganhängers (2) auf. Das Gewichtsmerkmal ist bevorzugt das Gesamtgewicht (G). Mit der Detektionseinrichtung (22) können ein oder mehrere weitere Gewichtsmerkmale, z.B. die Stützkraft (S) an der Anhängerkupplung (9) oder die Stützkraft (S') an der Deichselstütze (10) oder eine Achslast (AL) der Achsanordnung (11), insbesondere einer Anhängerachse (12), detektiert werden. Dies kann die Detektion der Achslast (AL) einer einzelnen Anhängerachse (12) oder mehrerer Anhängerachsen oder einer Achsgruppe umfassen.

Die Detektionseinrichtung (22) ist mit ihren Komponenten in Figur 2 und 9 dargestellt. Die Detektionseinrichtung (22) umfasst eine Steuereinrichtung (28), eine Bedieneinrichtung (30) und mehrere, vorzugsweise zwei, angetriebene, ein- und ausfahrbare Hubstützen (36). Die Hubstützen (36) sind mit der Steuereinrichtung (28) verbunden und können von der Steuereinrichtung (28) mittels der Bedieneinrichtung (30) gesteuert werden. Die Hubstützen (36) sind zur Montage an der Achsanordnung (11) vorgesehen und ausgebildet bzw. sind am Fahrzeuganhänger (2) an der Achsanordnung (11) montiert. Die Hubstützen (36) dienen zum Heben und Senken der Achsanordnung (11).

Die Hubstützen (36) weisen jeweils einen Montagebeschlag (37) auf, mit dem sie an der Achseinrichtung (11), insbesondere an einer Anhängerachse (12), befestigt werden können. In den gezeigten Ausführungsbeispielen sind die Hubstützen (36) jeweils an einem Achskörper (13) fest montierbar oder montiert. Die Montage- oder Befestigungsstelle befindet sich jeweils an einem zum Längsträger (5) benachbarten Ende des Achskörpers (13). In einer abgewandelten Ausführung kann eine Hubstütze (36) auch an anderer Stelle der Achseinrichtung (11) bzw. Anhängerachse (12) montiert oder befestigt werden, z.B. an einem Achsträgerschild. Die Hubstützen (36) können jeweils an einem Achskörper (13) auch beweglich, insbesondere schwenkbar, montierbar oder montiert sein.

Wenn die Achsanordnung (11) mehrere Anhängerachsen (12) umfasst, können z.B. die bevorzugt zwei Hubstützen (36) an nur einer der Anhängerachsen (12) montiert bzw. befestigt werden. Möglich sind auch eine größere Hubstützenzahl und eine Montage an mehreren Anhängerachsen.

Den Hubstützen (36) ist jeweils mindestens ein Detektionsmittel (24) zugeordnet, welches die jeweilige aufrechte, insbesondere vertikale, Hubstützenlast (H) der mit Bodenkontakt ausgefahrenen Hubstütze (36) aufnimmt. Für die konstruktive und funktionale Ausgestaltung der Hubstützen (36) und der Detektionsmittel (24) gibt es verschiedene, nachfolgend erläuterte Möglichkeiten.

Die Detektionseinrichtung (22) kann ferner eine Erfassungseinrichtung (23) umfassen, welche eine im Bereich der Zugdeichsel (7), insbesondere an der Deichselstütze (10) oder der Anhängerkupplung (9), wirkende aufrechte, insbesondere senkrechte, Stützlast (S,S') aufnimmt. Die Erfassungseinrichtung (23) kann alternativ oder zusätzlich eine aufrechte, insbesondere senkrechte, Aufbaustützenlast (A) von einer frontseitigen, mit Bodenkontakt ausgefahrenen Aufbaustütze (34) aufnehmen. Die Erfassungseinrichtung (23) weist hierfür ein oder mehrere Erfassungsmittel (25) auf. Das oder die Erfassungsmittel (25) sind jeweils der Deichselstütze (10) und/oder der Anhängerkupplung (9) und/oder einer frontseitigen Aufbaustütze (34) zugeordnet.

Die Detektionsmittel (24) sind mit der Steuereinrichtung (28) signaltechnisch verbunden, z.B. über Signalleitungen. Ein oder mehrere Erfassungsmittel (25) können ebenfalls mit der Steuereinrichtung (28) signaltechnisch verbunden sein. Das Erfassungsergebnis kann der Steuereinrichtung (28) auch auf andere Weise übermittelt werden. Hierfür kann z.B. ein Erfassungsmittel (25) als eine vom Bediener z.B. optisch erfassbare Lastanzeige (25') ausgebildet sein. Den erfassten Lastwert kann der Bediener dann an die Steuereinrichtung (28) in geeigneter Weise übermitteln, z.B. durch Eingabe an der Bedieneinrichtung (30). Die Bedieneinrichtung (30) und die Steuereinrichtung (28) weisen Kommunikationsmittel auf und können hierüber leitungsgebunden oder bevorzugt drahtlos kommunizieren.

Die Steuereinrichtung (28) kann aus den aufgenommenen Hubstützenlasten (H) sowie einer aufgenommenen Stützlast (S,S') und/oder der aufgenommenen Aufbaustützenlast(en) (A) das Gesamtgewicht (G) des Fahrzeuganhängers und/oder die am Boden über die Fahrzeugräder (14) einwirkenden Achslast(en) (AL) ermitteln. Ferner ist eine Anzeige des Gesamtgewichts (G) und/oder der Achlast(en) möglich, z.B. an einer bevorzugt optischen Anzeige (32) der Bedieneinrichtung (30).

Die Steuereinrichtung (28) kann ferner aus der oder den aufgenommenen Aufbaustützenlast(en) (A) eine im Bereich der Zugdeichsel (7), insbesondere an der Deichselstütze (10) oder an der Anhängerkupplung (9) wirkende Stützlast (S,S') ermitteln und in der besagten Weise anzeigen. Dies kann z.B. geschehen, wenn kein Erfassungsmittel (25) im Bereich der Zugdeichsel (7), insbesondere an der Deichselstütze (10) oder an der Anhängerkupplung (9), angeordnet ist. Dies kann z.B. bei der Anordnung einer konventionellen Anhängerkupplung (9) oder eines üblichen einfachen und manuell bedienbaren Stützrads der Fall sein.

Die mehreren Aufbaustützen (34,35) können manuell bedienbar sein, z.B. mittels einer Kurbel. Vorzugsweise ist zumindest eine der Aufbaustützen (34,35) mit der Steuereinrichtung (28) verbunden und wird von dieser bevorzugt ferngesteuert angetrieben. Dies ist vorzugsweise zumindest bei einer, vorzugsweise beiden, frontseitigen Aufbaustützen (34) der Fall. In einer vorteilhaften Ausführungsform können auch alle frontseitigen und heckseitigen Aufbaustützen (34,35) angetrieben und von der Steuereinrichtung (28) ferngesteuert werden.

Die Hubstützen (36) sind reversierend angetrieben und können aktiv ein- und ausfahren. Die Hubstützen (36) können z.B. als hydromechanische, insbesondere hydraulische Hubstützen oder als motorische Hubstützen ausgebildet sein. Die Hubstützen (36) haben in der Einbaustellung am Fahrzeuganhänger (2) eine bevorzugt aufrechte, insbesondere vertikale, Wirkachse. Sie heben und senken die Achsanordnung (11) in gleicher Richtung. Sie bewegen dabei auch das Chassis (4) und den Fahrzeugaufbau (20) mit.

Die jeweilige Hubstütze (36) weist ein bevorzugt aufrecht, insbesondere vertikal, ein- und ausfahrbares Stützelement (38) und einen reversierbaren Stützenantrieb (39) auf. Der Stützenantrieb (39) ist in den gezeigten Ausführungsbeispielen als beidseitig wirkender hydraulischer Zylinder ausgebildet. Das Stützelement (38) ist dabei als linear und ggf. mehrstufig ein- und ausfahrbare Kolbenstange mit einem Stützteller (40) am freien Kolbenstangenende ausgebildet. In einer anderen Ausführungsform kann der Stützenantrieb (39) als z.B. elektrischer Antriebsmotor gestaltet sein, wobei das Stützelement (38) als Treibstange, z.B. Gewindespindel oder Zahnstange, mit einem endseitigen Stützteller (40) ausgebildet ist.

Die Ausbildung des oder der Detektionsmittel (24) kann sich nach der Ausbildung der Hubstützen (36) richten. In den gezeigten Ausführungsbeispielen mit hydraulischen Hubstützen (36) ist das jeweilige Detektionsmittel (24) z.B. als Drucksensor (26) ausgebildet. Der Drucksensor (26) befindet sich z.B. in einem Hydraulikkreis (42) zwischen der jeweiligen Hubstütze (36) und einer hydraulischen Versorgungseinrichtung (41). Die Versorgungseinrichtung (41) ist mit der Steuereinrichtung (28) verbunden und umfasst zumindest eine Pumpe und einen Tank für Hydraulikflüssigkeit sowie eine Ventilanordnung. Die Hubstützen (36) können jeweils eine eigene zugeordnete Versorgungseinrichtung oder wie in Figur 2 eine gemeinsame und z.B. zentrale Versorgungseinrichtung (41) haben.

Die Steuereinrichtung (28) kann aus dem detektierten und gemeldeten hydraulischen Druckwert anhand der bekannten Zylinderabmessungen und insbesondere des Kolbens der hydraulischen Stützenantriebe (39) bzw. Zylinder die an der jeweiligen Hubstütze (36) in Ausfahrrichtung wirkende aufrechte, insbesondere vertikale, Hubstützenlast (H) ermitteln.

In einer anderen Ausführungsform kann ein Detektionsmittel (24) z.B. als Kraftsensor (27) ausgebildet sein. Ein Kraftsensor (27) kann z.B. an einem elektromotorischen Stützenantrieb (39) angeordnet sein. Er kann die Antriebskraft bzw. das Antriebsmoment direkt als Kraft- oder Momentensensor oder indirekt über die Stromaufnahme des Elektromotors aufnehmen und hierfür als Stromsensor gestaltet sein. In einer weiteren Variante kann ein Kraftsensor (27) z.B. an einem Stützteller (40) angeordnet sein und kann die zwischen dem Boden und dem aufstehenden Stützteller (40) wirkende Vertikalkraft aufnehmen. Ferner kann ein Kraftsensor (27) als Dehnungssensor ausgebildet und an einem Stützelement (38) angeordnet sein. Daneben gibt es verschiedene weitere Möglichkeiten für die Ausgestaltung eines Detektionsmittels (24) und dessen Zuordnung zu einer Hubstütze (36).

Figur 3 und 4 sowie Figur 5 und 6 zeigen Varianten von Aufbaustützen (34,35). Die Aufbaustützen (34) können ebenfalls als hydromechanische, insbesondere hydraulische, oder als motorische Aufbaustütze oder in anderer Weise ausgebildet sein. In einer besonders einfachen Ausführung können sie auch manuell per Kurbel oder auf andere Weise bedient werden.

Die gezeigten Aufbaustützen (34) weisen jeweils ein ein- und ausfahrbares Stützelement (38) und einen reversierbaren Stützenantrieb (39) auf. Das Stützelement (38) umfasst z.B. ein an der Unterseite des Aufbaubodens (21) angeordnetes Stützengestell und einen hieran schwenkbar gelagerten Stützarm (43) sowie einen verstellbaren Schwenkmechanismus (44). Der Schwenkmechanismus (44) kann von dem Stützenantrieb (39) betätigt werden.

Figur 3 und 4 zeigen z.B. einen am Stützengestell liegend angeordneten Stützenantrieb (39), der als elektromotorischer Spindelantrieb ausgebildet ist und eine mit dem Schwenkmechanismus (44) gelenkig verbundene Spindelmutter linear und reversierend antreibt. Über die Spindelmutterbewegung wird der Schwenkarm (43) gehoben und gesenkt.

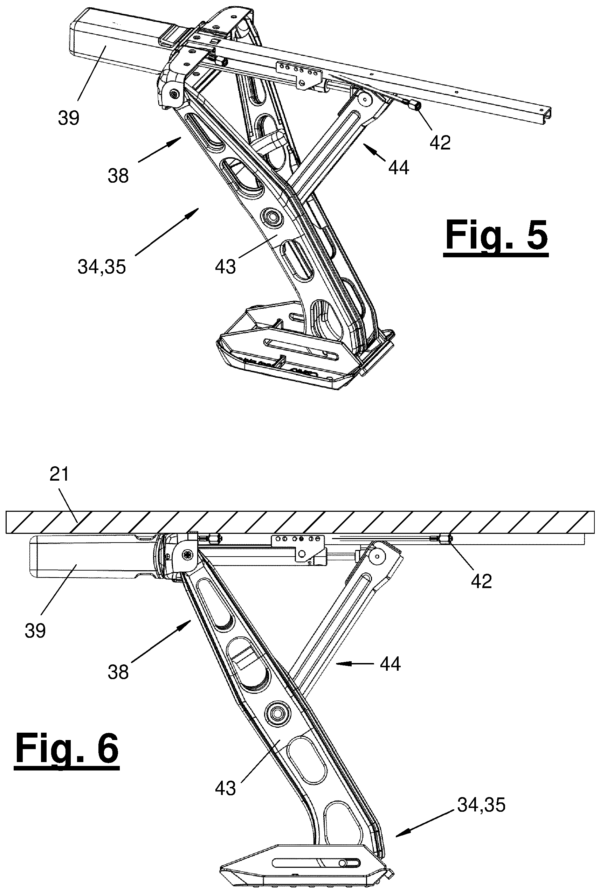

Figur 5 und 6 zeigen eine Variante der Aufbaustütze (34,35) mit einem hydromechanischen, insbesondere hydraulischen, reversierbaren Stützenantrieb (39). Dieser ist z.B. als hydraulischer Zylinder ausgebildet, der ebenfalls unter dem Aufbauboden (21) parallel liegend angeordnet ist. Die ein- und ausfahrbare Kolbenstange ist an ihrem äußeren Ende gelenkig mit dem Schwenkmechanismus (44) verbunden und bewegt dadurch einen Schwenkarm (43) des Stützelements (38). Der hydraulische Stützenantrieb (39) ist in den gezeigten Ausführungsbeispielen mit der z.B. zentralen Versorgungseinrichtung (41) über einen Hydraulikkreis (42) verbunden. Figur 2 und 9 zeigen diese Anordnung. In Abwandlung dieser Ausführungsform können die Hubstützen (36) und/oder die Aufbaustützen (34,35) jeweils einzeln oder gruppenweise eine eigene Versorgungseinrichtung (41) haben.

Für das oder die Erfassungsmittel (25) gibt es ähnliche Ausgestaltungsmöglichkeiten wie bei den vorgenannten Detektionsmitteln (24). Bei hydraulischen Aufbaustützen (34,35) ist z.B. das der jeweiligen Aufbaustütze (34,35) zugeordnete Erfassungsmittel (25) als Drucksensor (26) in einem Hydraulikkreis (42) ausgebildet. Gemäß Figur 3 und 4 kann beim elektromotorischen Stützenantrieb (39) das Erfassungsmittel (25) z.B. als Kraftsensor (27) in der vorbeschriebenen Weise ausgestaltet sein. Ein Kraftsensor (27) kann auch am Fußteil des Schwenkarms (43) angeordnet sein und kann die bei Bodenkontakt wirkende vertikale Last aufnehmen. Ansonsten sind weitere Abwandlungen möglich.

Bei den Aufbaustützen (34,35) kann ein Erfassungsmittel (25) eine anders gerichtete, z.B. horizontale Last oder Kraft aufnehmen. Aus dem bekannten Geometriedaten des Stützelements (38) kann die Steuereinrichtung (28) die gewünschte vertikale Aufbaustützenlast (A) berechnen und für die Ermittlungen des betreffenden Gewichtsmerkmals, insbesondere des Gesamtgewichts (G) einsetzen.

Die vorgenannten Erfassungsmittel (25) an der Anhängerkupplung (9) und/oder der Deichselstütze (10) können ebenfalls in unterschiedlicher Weise ausgebildet sein. Ein Erfassungsmittel (25) kann z.B. als Kraftsensor ausgebildet und in der Kugelkalotte der Anhängerkupplung (9) derart angeordnet sein, dass hier bei geschlossener Anhängerkupplung (9) die vertikale Stützlast (S) aufgenommen wird.

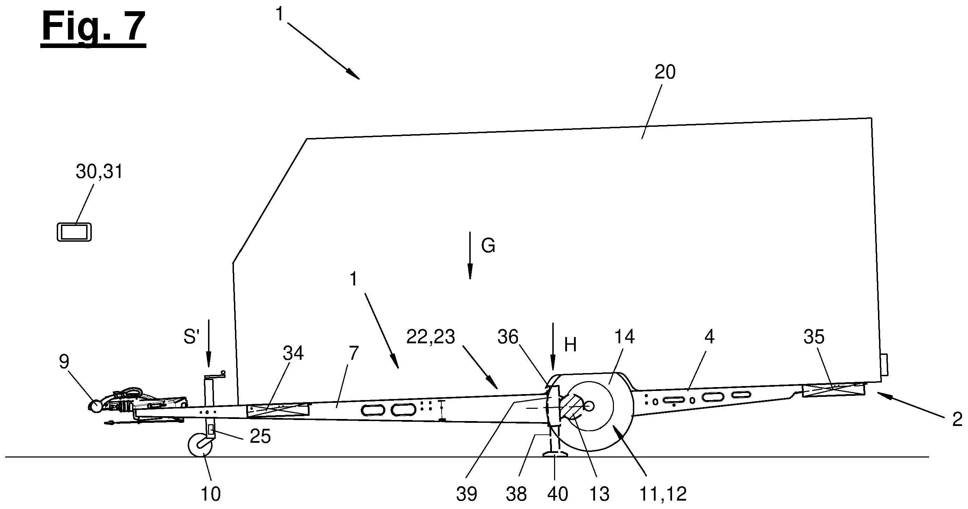

Ein Erfassungsmittel an der Deichselstütze (10) kann z.B. in der einfachsten Ausführungsform von Figur 1 als Lastanzeige (25') in Form einer mechanischen Waage oder dgl. ausgebildet sein. Der Lastwert kann hier vom Bediener z.B. optisch abgelesen werden. In einer anderen Ausführung kann z.B. gemäß Figur 7 ein Erfassungsmittel (25) mit der Steuereinrichtung (28) signaltechnisch verbunden und als Kraftsensor, z.B. am Schaft eines Stützrads, ausgebildet sein.

Die Bedieneinrichtung (30) kann z.B. ein bevorzugt mobiles spezifisches Bediengerät (31) mit einer Anzeige (32), einem Eingabemittel (33) und einem Kommunikationsmittel für die leitungsgebundene oder bevorzugt drahtlose Kommunikation mit der Steuereinrichtung (28) umfassen. Das spezifische oder dedizierte Bediengerät (31) kann dabei Bestandteil der Detektionseinrichtung (22) sein.

In einer anderen Ausführung kann die Bedieneinrichtung (30) eine App für ein mobiles und unspezifisches Consumer-Bediengerät umfassen. Das Consumer-Bediengerät (31) kann z.B. ein Smartphone, Tablet, Notebook oder dgl. sein und kann eine Anzeige (32) und ein Eingabemittel (33) sowie ein Kommunikationsmittel für die bevorzugt drahtlose Kommunikation mit der Steuereinrichtung (28) umfassen. Das Consumer-Bediengerät kann ein Bestandteil der Detektionseinrichtung (22) sein, muss es aber nicht.

Für die Detektion eines Gewichtsmerkmals des Fahrzeuganhängers (2) sowie die aufrechten, insbesondere vertikalen, Hubstützenlasten (H), Stützenlasten (S,S') und Aufbaustützenlasten (A) gibt es verschiedene Möglichkeiten.

Figur 7 zeigt eine erste Variante mit einem vom Zugfahrzeug (3) abgekuppelten Fahrzeuganhänger (2). Die Deichselstütze (10) ist mit Bodenkontakt ausgefahren und stützt den Fahrzeuganhänger (2) im Frontbereich am Boden ab. Der Fahrzeuganhänger (2) kann dabei frontseitig schräg nach unten geneigt sein. Die z.B. zwei Hubstützen (36) sind ebenfalls mit Bodenkontakt ausgefahren und haben die Achsanordnung (11) angehoben. Die Fahrzeugräder (14) können dabei von Boden abgehoben sein oder können weitgehend kraftlos am Boden aufliegen. Der Fahrzeuganhänger (2) ist auf den beiden Hubstützen (36) und der Deichselstütze (10) abgestützt, wobei von den Detektions- und Erfassungsmitteln (24,25) die aufrechten, insbesondere vertikalen, Hubstützenlasten (H) und die aufrechte, insbesondere vertikale, Stützlast (S') aufgenommen und der Steuereinrichtung (28) direkt oder mittelbar gemeldet werden, wobei diese das gewünschte Gewichtsmerkmal, z.B. das Gesamtgewicht (G) und/oder eine Achslast (AL), ermittelt und am Bediengerät (31) anzeigt.

In Abwandlung zu Figur 7 kann der Fahrzeuganhänger (2) gemäß Figur 1 noch am Zugfahrzeug (3) angekuppelt sein. Der Fahrzeuganhänger (2) ist dann auf den z.B. zwei ausgefahrenen Hubstützen (36) am Boden und durch die Anhängerkupplung (9) am Zugfahrzeug (3) abgestützt. Das Erfassungsmittel (25) an der Anhängerkupplung (9) und die Hubstützen (36) melden die jeweils aufrechten, insbesondere vertikalen, Hubstützenlasten (H) und die vertikale Stützlast (S) direkt oder mittelbar an die Steuereinrichtung (28) für die Ermittlung und Anzeige des betreffenden Gewichtsmerkmals, insbesondere des Gesamtgewichts (G) und/oder einer Achslast (AL).

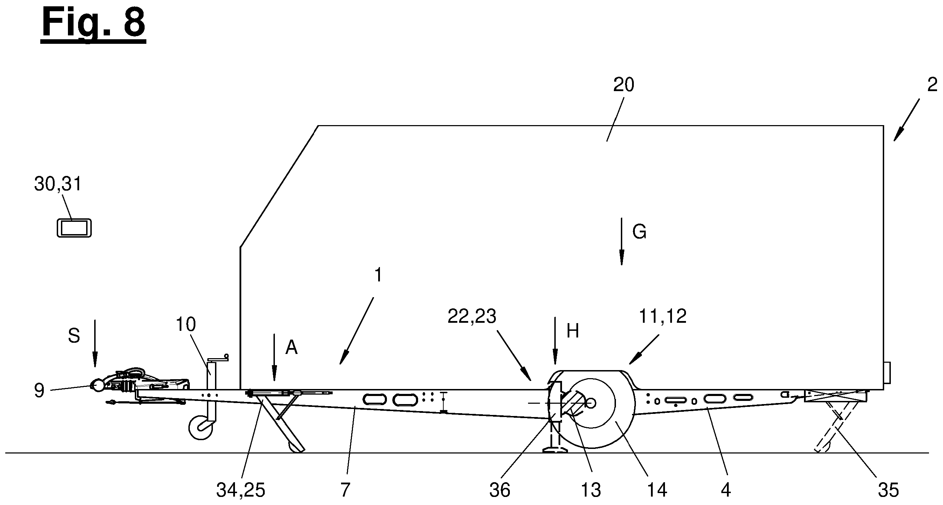

Figur 8 zeigt eine Variante, in der weder die Anhängerkupplung (9), noch die Deichselstütze (10) ein Erfassungsmittel (25) haben. Die eine oder bevorzugt zwei frontseitigen Aufbaustützen (34) haben jeweils ein Erfassungsmittel (25). Der abgekuppelte Fahrzeuganhänger (2) wird zunächst auf den Fahrzeugrädern (14) und der Deichselstütze (10) abgestellt. Abschließend werden die Hubstützen (36) mit Bodenkontakt ausgefahren und heben die Achsanordnung (11) in der vorbeschriebenen Weise frei.

Anschließend werden die frontseitigen Aufbaustützen (A) mit Bodenkontakt soweit ausgefahren, dass sie den Frontbereich des Chassis (4) bzw. der Zugdeichsel (7) anheben und dabei die Deichselstütze (10) entlasten. Der Fahrzeuganhänger (2) ist dann auf den Hubstützen (36) und der oder den frontseitigen Aufbaustützen (34) abgestützt. Es ist alternativ möglich, die Hubstützen (36) wieder einzufahren, bevor oder während die frontseitigen Aufbaustützen (A) ausgefahren werden. Bei der Erfassung der Aufbaustützenlast(en) (A) kann der Fahrzeuganhänger (2) auch mittels der Achsanordnung (11) am Boden abgestützt sein.

Aus den von den Detektionsmitteln (24) und den ein oder mehreren Erfassungsmitteln (25) gewonnenen aufrechten, insbesondere vertikalen, Hubstützenlasten (H) und Aufbaustützenlasten (A) ermittelt die Steuereinrichtung (28) das gesuchte Gewichtsmerkmal, z.B. das Gesamtgewicht (G) und/oder eine Achslast (AL). Hieran kann sich ein Nivelliervorgang anschließen.

Nach der Detektion bzw. Ermittlung des gewünschten Gewichtsmerkmals sowie ggf. nach dem Nivellieren kann der abgekuppelte und abgestellte Fahrzeuganhänger (2) durch Ausfahren der heckseitigen Aufbaustützen (35) noch weiter stabilisiert werden. Wie Figur 8 und 10 verdeutlichen, kann der Fahrzeuganhänger (2) in der stabilen Lage durch die Hubstützen (36) und die frontseitigen sowie heckseitigen Aufbaustützen (34,35) bei ggf. freigehobener Achsanordnung (11) stabilisiert werden.

Es ist auch möglich, die Hubstützen (36) und/oder die frontseitigen Aufbaustützen (34) wieder einzufahren. Eine stabile Lage des Fahrzeuganhängers (2) kann auch auf andere Weise erreicht werden, z.B. durch Abstützung auf allen Aufbaustützen (34,35) oder auf Hubstützen (36), heckseitigen Aufbaustützen (35) und ggf. Deichselstütze (10).

Die Detektionseinrichtung (22) kann in einer weiteren Ausgestaltung einen Neigungssensor (29) umfassen, der eine Neigung des Fahrzeuganhängers (2) um die Längsachse (46) und gegebenenfalls um die Querachse (45) detektiert. Der Neigungssensor kann auch zu einer Nivelliereinrichtung gehören und von der Detektionseinrichtung (22) genutzt werden.

Der Neigungssensor kann dabei insbesondere eine Neigung der Achsanordnung (11) um die Längsachse (46) aufnehmen. Der Neigungssensor (29) kann mit der Steuereinrichtung (28) verbunden sein. Mit Hilfe des Neigungssensors (29) können z.B. der Fahrzeuganhänger (2), insbesondere die Achsanordnung (11), in eine horizontale Lage um die Längsachse (46) gebracht werden. Dies kann geschehen bevor die Hubstützenlasten (H) von der Detektionseinrichtung (22) aufgenommen werden. Andererseits können über den sensierten Neigungswinkel die in schräger Ausfahrrichtung detektierten Lasten oder Kräfte in eine vertikale Hubstützenlast (H) umgerechnet werden.

Der Neigungssensor (29) ist in Figur 1 dargestellt. Er ist dabei z.B. als kompakter zweiachsiger Sensor ausgebildet, der die Neigung bzgl. beider Achsen (45,46) erfasst. Alternativ kann der Neigungssensor von zwei Einzelsensoren gebildet werden, die mit gegenseitiger Distanz am Fahrzeuganhänger (2) angeordnet werden, wobei der eine Einzelsensor die Neigung um die Längsachse (46) und der andere die Neigung um die Querachse (45) aufnimmt.

Die Detektionseinrichtung (22) und die Steuereinrichtung (28) sowie der Neigungssensor (29) können mit einer Nivellierfunktion ergänzt und erweitert werden. Die Steuereinrichtung (28) kann hierfür z.B. ein entsprechendes Software- und/oder Hardware-Modul umfassen.

Das Nivellieren kann im direkten Anschluss an die Ermittlung des oder der gewünschten Gewichtsmerkmale erfolgen. Die am Nivellieren beteiligten Hubstützen (36) und/oder Aufbaustützen (34,35) können bereits mit detektiertem Bodenkontakt ausgefahren sein. Die besagte Ermittlung und das anschließende Nivellieren können in der Steuereinrichtung (28) und/oder in der besagten App als Kombiprozess programmiert sein. Sie können alternativ oder zusätzlich auch als Einzelprozesse vorgesehen und ggf. programmiert sein.

Die Steuereinrichtung (28) kann mit der Bremseinrichtung (16), insbesondere mit der Schlingerbremse (18) signaltechnisch für die Mitteilung eines relevanten Gewichtsmerkmals, insbesondere des Gesamtgewichts (G), verbunden sein. Die Bremseinrichtung (16), insbesondere die Schlingerbremse (18) kann dann die entwickelte Bremskraft an das Gewichtsmerkmal, insbesondere Gesamtgewicht (G), anpassen.

Die Detektionseinrichtung (22) kann auch zur Ermittlung eines anderen Gewichtsmerkmals, z.B. der an der Anhängerkupplung (9) oder an der Deichselstütze (10) wirkenden aufrechten, insbesondere vertikalen, Stützlast (S,S'), eingesetzt werden, insbesondere wenn dort z.B. kein Erfassungsmittel (25) angeordnet ist. Hierzu werden gemäß der vorbeschriebenen Figur 8 die aufrechten, insbesondere vertikalen, Hubstützenlasten (H) und Aufbaustützenlast(en) (A) aufgenommen.

Die Wirkposition der Aufbaustützenlast(en) (A) bei detektiertem Bodenkontakt der Aufbaustütze (34) und der Abstand der bodenseitigen Wirkposition in Längsrichtung (46) von der Achsanordnung (11) sind berechenbar. Ein Scherenwinkel von Schwenkarm (43) und Schwenkmechanismus (44) bei horizontaler Längsachse (46) kann bekannt und in der Steuereinrichtung (28) eingegeben und gespeichert sein. Aus einer erfassten Ausfahrlänge des Stützenantriebs (39) kann die Steuereinrichtung (28) anhand der bekannten Geometriedaten des Stützelements (38) die Wirkposition sowie den besagten Abstand berechnen und die Aufbaustützenlast (A) ermitteln.

Desgleichen sind auch die Abstände der Anhängerkupplung (9) und der Deichselstütze (10) von der gleichen Bezugsstelle an der Achsanordnung (11) bekannt. Sie können in der Steuereinrichtung (28) eingegeben und gespeichert werden. Aus der/den Aufbaustützenlast(en) (A) können über die Abstandsverhältnisse die besagten Stützlasten (S,S') von der Steuereinrichtung (28) berechnet und in geeigneter Weise, z.B. am Bediengerät (31), angezeigt werden.

Ein anderes Gewichtsmerkmal des Fahrzeuganhängers (2) können die je nach Achsenzahl ein oder mehreren Achslasten (AL) sein, mit denen das Fahrzeuggewicht über die Fahrzeugräder (14) am Boden einwirkt. Für die Ermittlung der ein oder mehreren Achslasten kann die Detektionseinrichtung (22) genügen. Die Erfassungseinrichtung (23) ist nicht erforderlich und kann entfallen. Über die mit der Detektionseinrichtung (22) aufgenommenen aufrechten, insbesondere vertikalen, Hubstützenlasten (H) können die ein oder mehreren Achslasten (AL) ermittelt und in der vorbeschriebenen Weise angezeigt werden.

Die an der jeweiligen Aufstandsfläche der Fahrzeugräder (14) wirkende Achslast (AL) kann z.B. angenähert durch die Summe der Hubstützenlasten (H) ermittelt werden. Für eine genauere Ermittlung der Achslast (AL) kann z.B. ein Abstand zwischen den Hubstützen (36) und der jeweiligen Aufstandsfläche berücksichtigt werden. Eine Achslastermittlung ist alternativ oder zusätzlich auch aus Aufbaustützenlasten (A) unter Berücksichtigung von den Abständen der betreffenden Aufbaustützen (34,35) zu den jeweiligen Aufstandsflächen möglich.

Über die Achslast(en) (AL) können eventuelle ungünstige Schwerpunktverschiebungen des Anhängergewichts festgestellt werden. Dies kann evtl. in Verbindung mit der Aufnahme einer der Stützlasten (S,S') erfolgen. Ferner kann eine eventuelle Überschreitung einer zulässigen Achslast kontrolliert und angezeigt oder auch als Warnung signalisiert werden.

Bei der vorbeschriebenen Aufnahme der aufrechten Lasten (A,H,S,S') können eventuelle Neigungen des Fahrzeuganhängers (2) und seines Chassis (4) sowie der Zugdeichsel (7) berücksichtigt werden, um durch Umrechnung mit dem Neigungswinkel den exakten Wert der jeweils vertikalen Last (A,H,S,S') zu gewinnen. Andererseits kann mit einer geringeren Genauigkeit und einer Vernachlässigung von eventuellen Fahrzeugneigungen gearbeitet werden. Die aufgenommenen aufrechten Lasten (A,H,S,S') können dann ohne Korrektur und ohne Umrechnung für die Ermittlung des oder der gewünschten Gewichtsmerkmale benutzt werden. Dies gilt auch für die vorbeschriebene Ermittlung der Achslast(en).

### BEZUGSZEICHENLISTE

- 1: Stützenanordnung
- 2: Fahrzeuganhänger
- 3: Zugfahrzeug
- 4: Chassis
- 5: Längsträger
- 6: Querträger
- 7: Zugdeichsel
- 8: Deichselholm
- 9: Anhängerkupplung
- 10: Deichselstütze
- 11: Achsanordnung
- 12: Anhängerachse
- 13: Achskörper
- 14: Fahrzeugrad
- 15: Radschwinghebel
- 16: Bremseinrichtung
- 17: Betriebsbremse
- 18: Schlingerbremse
- 19: Radbremse
- 20: Anhängeraufbau
- 21: Aufbauboden
- 22: Detektionseinrichtung
- 23: Erfassungseinrichtung
- 24: Detektionsmittel
- 25: Erfassungsmittel
- 25': Lastanzeige
- 26: Drucksensor
- 27: Kraftsensor
- 28: Steuereinrichtung
- 29: Neigungssensor
- 30: Bedieneinrichtung
- 31: Bediengerät
- 32: Anzeige
- 33: Eingabemittel
- 34: Aufbaustütze Front
- 35: Aufbaustütze Heck
- 36: Hubstütze
- 37: Montagebeschlag
- 38: Stützelement
- 39: Stützenantrieb
- 40: Stützteller
- 41: Versorgungseinrichtung
- 42: Fluidkreis, Hydraulikkreis
- 43: Stützarm
- 44: Schwenkmechanismus
- 45: Querachse
- 46: Längsachse
- H: Hubstützenlast
- A: Aufbaustützenlast
- S: Stützlast an Anhängerkupplung
- S': Stützlast an Deichselstütze
- G: Gesamtgewicht
- AL: Achslast

## Patentansprüche

1. Stützenanordnung für einen straßentauglichen Fahrzeuganhänger (2), welcher ein Chassis (4) mit einer Achsanordnung (11), eine frontseitige starre Zugdeichsel (7) mit einer Deichselstütze (10) und mit einer frontseitigen Anhängerkupplung (9) sowie einen Anhängeraufbau (20) aufweist, wobei die Stützenanordnung (1) mehrere Aufbaustützen (34,35) für den Front- und/oder Heckbereich des Anhängeraufbaus (20) umfasst, die zur Befestigung an einem Aufbauboden (21) des Anhängeraufbaus (20) und ggf. am Chassis (4) vorgesehen und ausgebildet sind, wobei die Stützenanordnung (1) eine Detektionseinrichtung (22) für ein Gewichtsmerkmal, insbesondere für das Gesamtgewicht (G) und/oder eine Achslast (AL), des Fahrzeuganhängers (2) aufweist, wobei die Detektionseinrichtung (22) umfasst
- eine Steuereinrichtung (28),
- eine Bedieneinrichtung (30),
- mehrere, insbesondere zwei, hiervon steuerbare, angetriebene, ein- und ausfahrbare Hubstützen (36), die zur Montage an der Achsanordnung (11) sowie zum Heben und Senken der Achsanordnung (11) vorgesehen und ausgebildet sind,
- mehrere den Hubstützen (36) jeweils zugeordnete Detektionsmittel (24), welche die jeweilige aufrechte Hubstützenlast (H) der ausgefahrenen Hubstütze (36) aufnehmen, und
- bevorzugt eine Erfassungseinrichtung (23), welche eine im Bereich der Zugdeichsel (7), insbesondere an der Deichselstütze (10) oder der Anhängerkupplung (9), wirkende aufrechte Stützlast (S,S') und/oder eine aufrechte Aufbaustützenlast (A) von einer frontseitig am Anhängeraufbau (20) anzuordnenden Aufbaustütze (34) aufnimmt.

2. Stützenanordnung nach Anspruch 1, **dadurch gekennzeichnet, dass** die Steuereinrichtung (28) aus den aufgenommenen Hubstützenlasten (H) sowie der aufgenommenen Stützlast (S,S') und/oder der aufgenommenen Aufbaustützenlast(en) (A) das Gesamtgewicht (G) und/oder eine Achslast (AL) des Fahrzeuganhängers (2) ermittelt und anzeigt, bevorzugt an einer Anzeige (32) der Bedieneinrichtung (30) und/oder dass die Steuereinrichtung (28) aus der/den aufgenommenen Aufbaustützenlast(en) eine im Bereich der Zugdeichsel (7), insbesondere an der Deichselstütze (10) oder an der Anhängerkupplung (9), wirkende aufrechte Stützlast (S,S') ermittelt und anzeigt, bevorzugt an einer Anzeige (32) der Bedieneinrichtung (30).

3. Stützenanordnung nach Anspruch 1 oder 2, **dadurch gekennzeichnet, dass** zumindest eine der Aufbaustützen (34,35), insbesondere zumindest eine frontseitige Aufbaustütze (34), mit der Steuereinrichtung (28) verbunden und bevorzugt gesteuert angetrieben ist.

4. Stützenanordnung nach einem der vorhergehenden Ansprüche, **dadurch gekennzeichnet, dass** die Erfassungseinrichtung (23) ein oder mehrere Erfassungsmittel (25) umfasst, welche jeweils der Deichselstütze (10) und/oder der Anhängerkupplung (9) und/oder einer frontseitigen Aufbaustütze (34) zugeordnet sind und welche die Stützlast (S,S') und/oder die Aufbaustützenlast (A) aufnehmen.

5. Stützenanordnung nach einem der vorhergehenden Ansprüche, **dadurch gekennzeichnet, dass** ein Erfassungsmittel (25), insbesondere ein Erfassungsmittel (25) an der Deichselstütze (10), eine von einem Bediener erfassbare Lastanzeige (25') für die aufgenommene Stützlast (S,S') und/oder Aufbaustützenlast (A) umfasst, wobei die Bedieneinrichtung (30) ein Eingabemittel (33) aufweist, das zur bedienerseitigen Eingabe der Stützlast (S,S') und/oder Aufbaustützenlast (A) und zu deren Übermittlung an die Steuereinrichtung (28) vorgesehen und ausgebildet ist.

6. Stützenanordnung nach einem der vorhergehenden Ansprüche, **dadurch gekennzeichnet, dass** die Detektionseinrichtung (1) einen mit der Steuereinrichtung (28) bevorzugt verbundenen Neigungssensor (29) umfasst, der eine Neigung des Fahrzeuganhängers (2), insbesondere der Achsanordnung (11), um eine Längsachse (46) und ggf. eine Querachse (45) des Fahrzeuganhängers (2) detektiert.

7. Stützenanordnung nach einem der vorhergehenden Ansprüche, **dadurch gekennzeichnet, dass** die Bedieneinrichtung (30) ein bevorzugt mobiles spezifisches Bediengerät (31) mit einer Anzeige (32), einem Eingabemittel (33) und einem Kommunikationsmittel umfasst und/oder dass die Bedieneinrichtung (30) eine App für ein mobiles unspezifisches Consumer-Bediengerät (31) mit einer Anzeige (32), einem Eingabemittel (33) und einem Kommunikationsmittel umfasst, insbesondere für ein Smartphone, Tablet, Notebook oder dgl..

8. Stützenanordnung nach einem der vorhergehenden Ansprüche, **dadurch gekennzeichnet, dass** die reversierend angetriebene Hubstütze (36) als hydromechanische, insbesondere hydraulische, oder als motorische Hubstütze ausgebildet ist und/oder dass zumindest eine Aufbaustütze (34) als hydromechanische, insbesondere hydraulische, oder als motorische Aufbaustütze ausgebildet ist.

9. Stützenanordnung nach einem der vorhergehenden Ansprüche, **dadurch gekennzeichnet, dass** die Steuereinrichtung (28) mit einer Bremseinrichtung (16), insbesondere Schlingerbremse (18), des Fahrzeuganhängers (2) verbindbar ist, wobei die Bremskraft der Bremseinrichtung (16) in Abhängigkeit vom Gesamtgewicht (G) einstellbar ist.

10. Straßentauglicher Fahrzeuganhänger mit einem Chassis (4), einer Achsanordnung (11), einer frontseitigen starren Zugdeichsel (7), einer Deichselstütze (10), einer frontseitigen Anhängerkupplung (9) sowie einem Anhängeraufbau (20) und mit einer Stützenanordnung (1), **dadurch gekennzeichnet, dass** die Stützenanordnung (1) nach mindestens einem der Ansprüche 1 bis 9 ausgebildet ist.

11. Fahrzeuganhänger nach Anspruch 10, **dadurch gekennzeichnet, dass** das Chassis (4) mehrere Längsträger (5) und ggf. ein oder mehrere Querträger (6) umfasst.

12. Fahrzeuganhänger nach Anspruch 10 oder 11, **dadurch gekennzeichnet, dass** zumindest eine Aufbaustütze (34) zwischen der Achsanordnung (11) und dem frontseitigen Ende der Zugdeichsel (7) angeordnet ist.

13. Verfahren zum Detektieren eines Gewichtsmerkmals, insbesondere des Gesamtgewichts (G) und/oder einer Achslast (AL), eines straßentauglichen Fahrzeuganhängers (2) mit einer Stützenanordnung (2) gemäß mindestens einem der Ansprüche 1 bis 9, wobei der Fahrzeuganhänger (2) auf der Achsanordnung (11) und der Deichselstütze (10) abgestellt wird, wobei anschließend die von der Steuereinrichtung (28) gesteuerten Hubstützen (36) ausgefahren werden und die Achsanordnung (11) freiheben, wobei die aufrechten Hubstützenlasten (H) der ausgefahrenen Hubstützen (36) von Detektionsmitteln (24) der Detektionseinrichtung (22) aufgenommen und der Steuereinrichtung (28) mitgeteilt werden, und wobei bevorzugt von der Erfassungseinrichtung (23) eine im Bereich der Zugdeichsel (7), insbesondere an der Deichselstütze (10) oder der Anhängerkupplung (9), wirkende Stützlast (S,S') und/oder eine im Bereich von einer frontseitig am Anhängeraufbau (20) angeordneten Aufbaustütze (34) wirkende aufrechte Aufbaustützenlast (A) aufgenommen und der Steuereinrichtung (28) mitgeteilt wird.

14. Verfahren nach Anspruch 13, **dadurch gekennzeichnet, dass** die Steuereinrichtung (28) aus den aufgenommenen Hubstützenlasten (H) und ggf. der aufgenommenen Stützlast (S,S') und/oder der/den aufgenommenen Aufbaustützenlast(en) (A) das Gesamtgewicht (G) und/oder eine Achslast (AL) des Fahrzeuganhängers (2) ermittelt und anzeigt, bevorzugt an einer Anzeige (32) der Bedieneinrichtung (30).

15. Verfahren nach Anspruch 13 oder 14, **dadurch gekennzeichnet, dass** die Steuereinrichtung (28) eine frontseitig am Anhängeraufbau (20) vor der Achsanordnung (11) angeordnete Aufbaustütze (34) ausfährt und den auf den Hubstützen (36) stehenden Fahrzeuganhänger (2) frontseitig anhebt und die Deichselstütze (10) vom Untergrund löst, wobei die Steuereinrichtung (28) die Aufbaustützenlast(en) (A) der frontseitigen Aufbaustütze(n) (34) aufnimmt und hieraus eine im frontseitigen Endbereich der Zugdeichsel (7), insbesondere an der Anhängerkupplung (9), wirkende Stützlast (S,S') ermittelt und anzeigt, bevorzugt an einer Anzeige (32) der Bedieneinrichtung (30).

## Claims

1. Support assembly for a road-going vehicle trailer (2), which has a chassis (4) with an axle assembly (11), has a front rigid drawbar (7) with a drawbar support (10) and with a front trailer coupling (9) and has a trailer body (20), wherein the support assembly (1) comprises a number of body supports (34, 35) for the front region and/or rear region of the trailer body (20), which are intended and designed for fastening on a body floor (21) of the trailer body (20) and possibly on the chassis (4), wherein the support assembly (1) has a detection device (22) for a weight feature, in particular for the total weight (G) and/or an axle load (AL), of the vehicle trailer (2), wherein the detection device (22) comprises
- a control device (28),
- an operating device (30),
- a number of, in particular two, driven, retractable and extendable lifting supports (36), which can be controlled by the aforementioned devices and are intended and designed for mounting on the axle assembly (11) and for raising and lowering the axle assembly (11),
- a number of detection means (24), which are respectively assigned to the lifting supports (36) and record the respective vertical lifting support load (H) of the extended lifting support (36), and
- preferably a sensing device (23), which records a vertical support load (S, S'), acting in the region of the drawbar (7), in particular on the drawbar support (10) or the trailer coupling (9), and/or a vertical body support load (A) of a body support (34) to be arranged on the front of the trailer body (20).

2. Support assembly according to Claim 1, **characterized in that** the control device (28) determines the total weight (G) and/or an axle load (AL) of the vehicle trailer (2) from the recorded lifting support loads (H) and the recorded support load (S, S')and/or the recorded body support load(s) (A) and displays it, preferably on a display (32) of the operating device (30), and/or **in that** the control device (28), from the recorded body support load(s), determines a vertical support load (S, S'), acting in the region of the drawbar (7), in particular on the drawbar support (10) or on the trailer coupling (9), and displays it, preferably on a display (32) of the operating device (30).

3. Support assembly according to Claim 1 or 2, **characterized in that** at least one of the body supports (34, 35), in particular at least one front body support (34), is connected to the control device (28) and is driven, preferably in a controlled manner.

4. Support assembly according to one of the preceding claims, **characterized in that** the sensing device (23) comprises one or more sensing means (25), which are respectively assigned to the drawbar support (10) and/or the trailer coupling (9) and/or a front body support (34) and which record the support load (S, S') and/or the body support load (A).

5. Support assembly according to one of the preceding claims, **characterized in that** a sensing means (25), in particular a sensing means (25) on the drawbar support (10), comprises a load display (25') for the recorded support load (S, S') and/or body support load (A) that can be sensed by an operator, wherein the operating device (30) has an input means (33), which is intended and designed for the operator input of the support load (S, S') and/or body support load (A) and its transmission to the control device (28).

6. Support assembly according to one of the preceding claims, **characterized in that** the detection device (1) comprises an inclination sensor (29), which is preferably connected to the control device (28) and detects an inclination of the vehicle trailer (2), in particular of the axle assembly (11), about a longitudinal axis (46) and possibly a transverse axis (45) of the vehicle trailer (2).

7. Support assembly according to one of the preceding claims, **characterized in that** the operating device (30) comprises a preferably mobile specific operating unit (31) with a display (32), an input means (33) and a communication means and/or **in that** the operating device (30) comprises an app for a mobile non-specific consumer operating unit (31) with a display (32), an input means (33) and a communication means, in particular for a smartphone, tablet, notebook or the like.

8. Support assembly according to one of the preceding claims, **characterized in that** the reversingly driven lifting support (36) is designed as a hydromechanical, in particular hydraulic, lifting support or as a motorized lifting support and/or **in that** at least one body support (34) is designed as a hydromechanical, in particular hydraulic, body support or as a motorized body support.

9. Support assembly according to one of the preceding claims, **characterized in that** the control device (28) can be connected to a braking device (16), in particular a sway control brake (18), of the vehicle trailer (2), wherein the braking force of the braking device (16) can be set in dependence on the total weight (G).

10. Road-going vehicle trailer with a chassis (4), an axle assembly (11), a front rigid drawbar (7), a drawbar support (10), a front trailer coupling (9) and a trailer body (20) and with a support assembly (1), **characterized in that** the support assembly (1) is designed according to at least one of Claims 1 to 9.

11. Vehicle trailer according to Claim 10, **characterized in that** the chassis (4) comprises a number of longitudinal members (5) and possibly one or more transverse members (6).

12. Vehicle trailer according to Claim 10 or 11, **characterized in that** at least one body support (34) is arranged between the axle assembly (11) and the front end of the drawbar (7).

13. Method for detecting a weight feature, in particular the total weight (G) and/or an axle load (AL), of a road-going vehicle trailer (2) with a support assembly (2) according to at least one of Claims 1 to 9, wherein the vehicle trailer (2) is set down on the axle assembly (11) and the drawbar support (10), wherein the lifting supports (36), controlled by the control device (28), are subsequently extended and the axle assembly (11) is lifted clear, wherein the vertical lifting support loads (H) of the extended lifting supports (36) are recorded by detection means (24) of the detection device (22) and are relayed to the control device (28), and wherein a support load (S, S'), acting in the region of the drawbar (7), in particular on the drawbar support (10) or the trailer coupling (9), and/or a vertical body support load (A), acting in the region of a body support (34) arranged on the front of the trailer body (20), is recorded, preferably by the sensing device (23), and is relayed to the control device (28).

14. Method according to Claim 13, **characterized in that** the control device (28) determines the total weight (G) and/or an axle load (AL) of the vehicle trailer (2) from the recorded lifting support loads (H) and possibly the recorded support load (S, S') and/or the recorded body support load(s) (A) and displays it, preferably on a display (32) of the operating device (30).

15. Method according to Claim 13 or 14, **characterized in that** the control device (28) extends a body support (34), arranged on the front of the trailer body (20) in front of the axle assembly (11), and raises the vehicle trailer (2), standing on the lifting supports (36), at the front and brings the drawbar support (10) off the ground, wherein the control device (28) records the body support load(s) (A) of the front body support(s) (34) and determines therefrom a support load (S, S') acting in the front end region of the drawbar (7), in particular on the trailer coupling (9), and displays it, preferably on a display (32) of the operating device (30).

## Revendications

1. Ensemble de support pour une remorque de véhicule (2) apte à circuler sur route, qui comprend un châssis (4) avec un agencement d'essieu (11), un timon rigide avant (7) avec un support (10) de timon et un attelage avant (9), ainsi qu'une superstructure (20) de remorque, l'agencement de support (1) comprenant plusieurs supports (34, 35) de superstructure pour la zone avant et/ou arrière de la superstructure (20) de remorque, qui sont prévus et réalisés sur le châssis (4) pour être fixés à un plancher structurel (21) de la superstructure (20) de remorque et, le cas échéant sur le châssis (4), l'ensemble de support (1) comprenant un dispositif de détection (22) pour une caractéristique de poids, en particulier pour le poids total (G) et/ou une charge par essieu (AL) de la remorque (2), le dispositif de détection (22) comprenant
- un dispositif de commande (28),
- un dispositif de pilotage (30),
- plusieurs, en particulier deux, supports de levage (36) commandés par celui-ci, entraînés, rétractables et extensibles, qui sont prévus et conçus pour être montés sur l'agencement d'essieu (11) ainsi que pour lever et abaisser l'agencement d'essieu (11),
- plusieurs moyens de détection (24) associés respectivement aux supports de levage (36), qui absorbent la charge verticale respective (H) du support de levage (36) sorti, et
- de préférence un dispositif de détection (23) qui détecte une charge d'appui verticale (S, S') agissant dans la zone du timon (7), en particulier sur le support (10) de timon ou l'attelage (9) de remorque et/ou une charge d'appui verticale (A) sur les supports de superstructure provenant d'un support de superstructure (34) à disposer à l'avant sur la superstructure (20) de remorque.

2. Ensemble de support selon la revendication 1, **caractérisé en ce que** le dispositif de commande (28) détermine et affiche le poids total (G) et/ou une charge par essieu (AL) de la remorque (2) de véhicule à partir des charges (H) de support de levage absorbées ainsi que de la charge d'appui (S, S') absorbée et/ou de la ou des charges d'appui absorbées (A) sur les supports de superstructure, de préférence sur un afficheur (32) du dispositif de pilotage (30), et/ou **en ce que** le dispositif de commande (28) détermine, à partir de la ou des charges absorbées de support de la superstructure, une charge d'appui verticale (S, S') agissant dans la zone du timon (7), en particulier sur le support (10) de timon ou sur l'attelage (9) de remorque et l'affiche, de préférence sur un afficheur (32) du dispositif de pilotage (30).

3. Ensemble de support selon la revendication 1 ou la revendication 2, **caractérisé en ce qu'**au moins l'un des supports (34, 35) de superstructure, en particulier au moins un support avant (34) de superstructure, est relié au dispositif de commande (28) et est de préférence entraîné de manière commandée.

4. Ensemble de supports selon l'une des revendications précédentes, **caractérisé en ce que** le dispositif de détection (23) comprend un ou plusieurs moyens de détection (25) qui sont respectivement associés au support (10) de timon et/ou à l'attelage (9) de remorque et/ou à un support avant (34) de superstructure et qui détectent la charge d'appui (S, S') et/ou la charge d'appui (A) sur les supports de superstructure.

5. Ensemble de support selon l'une des revendications précédentes, **caractérisé en ce qu'**un moyen de détection (25), en particulier un moyen de détection (25) sur le support (10) de timon, comprend un indicateur de charge (25') détectable par un opérateur pour la charge d'appui (S, S') et/ou pour la charge d'appui (A) sur les supports de superstructure, le dispositif de pilotage (30) comprenant un moyen de saisie (33) qui est prévu et conçu pour la saisie par l'opérateur de la charge d'appui (S, S') et/ou de la charge d'appui (A) sur les supports de superstructure et pour sa transmission au dispositif de commande (28).

6. Ensemble de support selon l'une des revendications précédentes, **caractérisé en ce que** le dispositif de détection (1) comprend un capteur d'inclinaison (29) relié de préférence au dispositif de commande (28), qui détecte une inclinaison de la remorque (2), en particulier de l'agencement d'essieu (11), autour d'un axe longitudinal (46) et, le cas échéant, d'un axe transversal (45) de la remorque de véhicule (2).

7. Ensemble de support selon l'une des revendications précédentes, **caractérisé en ce que** le dispositif de pilotage (30) comprend un appareil de commande spécifique (31), de préférence mobile, avec un afficheur (32), un moyen de saisie (33) et un moyen de communication, et/ou **en ce que** le dispositif de pilotage (30) comprend une application pour un appareil de commande grand public non spécifique mobile (31) avec un afficheur (32), un moyen de saisie (33) et un moyen de communication, en particulier pour un smartphone, une tablette, un ordinateur portable ou similaire.

8. Ensemble de support selon l'une des revendications précédentes, **caractérisé en ce que** le support de levage à entraînement réversible (36) est conçu sous la forme d'un support de levage hydromécanique, en particulier hydraulique, ou sous la forme d'un support de levage motorisé, et/ou **en ce qu'**au moins un support (34) de superstructure est conçu sous la forme d'un support de superstructure hydromécanique, en particulier hydraulique, ou sous la forme d'un support de superstructure motorisé.

9. Ensemble de support selon l'une des revendications précédentes, **caractérisé en ce que** le dispositif de commande (28) est apte à être relié à un dispositif de freinage (16), en particulier un frein anti-lacets (18), de la remorque (2), la force de freinage du dispositif de freinage (16) étant réglable en fonction du poids total (G).

10. Remorque de véhicule apte à circuler sur route, comprenant un châssis (4), un agencement d'essieu (11), un timon rigide (7) à l'avant, un support (10) de timon, un attelage (9) de remorque à l'avant ainsi qu'une superstructure (20) de remorque et un ensemble de support (1), **caractérisée en ce que** l'ensemble de support (1) est conçu selon au moins l'une des revendications 1 à 9.

11. Remorque de véhicule selon la revendication 10, **caractérisée en ce que** le châssis (4) comprend plusieurs longerons (5) et, le cas échéant, une ou plusieurs traverses (6).

12. Remorque de véhicule selon la revendication 10 ou la revendication 11, **caractérisée en ce qu'**au moins un support (34) de superstructure est agencé entre l'agencement d'essieu (11) et l'extrémité avant du timon (7).

13. Procédé pour détecter une caractéristique de poids, en particulier le poids total (G) et/ou une charge par essieu (AL), d'une remorque de véhicule (2) apte à circuler sur route, avec un ensemble de support (2) selon au moins une des revendications 1 à 9, la remorque de véhicule (2) étant posée sur l'agencement d'essieu (11) et le support (10) de timon, les supports de levage (36) commandés par le dispositif de commande (28) étant ensuite déployés et soulevant librement l'agencement d'essieu (11), les charges verticales (H) de support de levage (36) déployés étant enregistrées par des moyens de détection (24) du dispositif de détection (22) et communiquées au dispositif de commande (28), et, de préférence, le dispositif de détection (23) détectant une charge d'appui (S, S') agissant dans la zone du timon (7), en particulier sur le support (10) de timon ou sur l'attelage (9) de remorque et/ou une charge verticale d'appui (A) sur les supports de superstructure agissant dans la zone d'un support (34) de superstructure agencé à l'avant sur la superstructure (20) de remorque étant détectée par le dispositif de détection (23) et communiquée au dispositif de commande (28).

14. Procédé selon la revendication 13, **caractérisé en ce que** le dispositif de commande (28) détermine, à partir des charges (H) de support de levage absorbées et, le cas échéant, de la charge d'appui (S, S') absorbée et/ou de la ou des charges d'appui absorbées (A) sur les supports de superstructure, le poids total (G) et/ou une charge par essieu (AL) de la remorque (2) du véhicule, et l'affiche, de préférence sur un afficheur (32) du dispositif de pilotage (30).

15. Procédé selon la revendication 13 ou la revendication 14, **caractérisé en ce que** le dispositif de commande (28) déploie un support (34) de superstructure agencé à l'avant de la remorque (20) en avant de l'agencement d'essieu (11) et soulève la remorque (2) à l'avant reposant sur les supports de levage (36) et détache du sol le support (10) de timon, le dispositif de commande (28) absorbant la ou les charges d'appui (A) exercées sur le ou les supports avant (34) de superstructure et déterminant à partir de celles-ci une charge d'appui (S, S') agissant dans la zone d'extrémité avant du timon (7), en particulier au niveau de l'attelage (9) de remorque et l'affichant, de préférence sur un afficheur (32) du dispositif de pilotage (30).
